# EUROPEAN PATENT SPECIFICATION

(11) **EP 4 445 087 B1**
(45) Date of publication and mention of the grant of the patent: **04.02.2026**
(21) Application number: 22826591.4
(22) Date of filing: 06.12.2022
(51) Int. Cl.: E03C 1/00, F28D 21/00, F28F 9/22, F28F 19/01, F28D 7/16, E03C 1/282, E03C 1/29, E03F 5/04

(54) **HEAT EXCHANGER WATER TRAP**
WÄRMETAUSCHERWASSERFALLE
ÉCHANGEUR DE CHALEUR À POT DE PURGE

(30) Priority: 07.12.2021 DK PA202170600
(43) Date of publication of application: 16.10.2024
(73) Proprietor: KNL HOLDING HJØRRING APS, 9480 Løkken (DK)
(72) Inventor: ANDERSEN, Martin Rønnov, 9870 Sindal (DK); LARSEN, Kjeld Nedergaard, 9480 Løkken (DK)
(74) Representative: Chas. Hude A/S
(86) International application number: PCT/DK2022/050266
(87) International publication number: WO 2023/104270

(56) References cited:
- EP-B1- 2 746 710
- GB-A- 597 611
- KR-U- 20120 003 351
- KR-Y1- 840 000 690
- US-A- 5 148 858
- US-A1- 2020 116 439

## Description

### Field of the Invention

The present invention relates to field of energy saving and heat recovery from wastewater, particularly the wastewater from a shower.

### Background of the invention

A significant amount of energy used in both industries and domestic households is consumed through heating water for personal washing, showering, and bathing, and for washing laundry and other applications. In the majority of these use scenarios, the wastewater still holds a decent amount of energy which represents a significant wastage of energy resources. Recovery of energy from wastewater has been disclosed previously.

US 5148858 discloses a heat exchanger in which vertically arranged baffles can function as a weir. Such a construction leads to a complication solution where the heat exchanger needs to be arranged in multiple layers to achieve sufficient heat exchange or the heat exchanger needs to be installed in a non ideal direction with respect to the flow of waste water.

US 5,143,149 shows a heat exchanger with tubing helically placed in a cylindric shape, within a chamber, which holds the liquid, before being passed along the discharge area. The main problem with this invention is the fact that the space within the chamber, is not sufficiently used. The convective heat transfer area, between the warm wastewater and cold supply water, is small compared to the overall size of the invention. This leads to low efficiency.

US 2017/0121951 A1 shows a flushing assembly comprising a foundation and a heat exchanger. The heat exchanger is designed as a helical channel, with both a hot and cold side. The main issue with this invention is that the heat transfer area is small, compared to what can be achieved. This lowers the overall efficiency of the system.

US 2017/0198982 A1 shows a heat exchanger being submerged into a water trap. The main issue with this invention is that the drain is in one side of the trap, and it is relatively small. Given that they only have one outlet, the dynamic behaviour of the fluid becomes very limited.

EP 1 809 965 B1 shows a helically heat exchanger submerged into a water trap. The drawback of this disclosure is that evenly distributed liquid flow in the tubes cannot ensure reduced efficiency. The tubes are, from the looks of it, in a rectangular form which amplifies the issue. The flow is always going to choose the direction where the pressure loss is at its lowest, and in this scenario, that would be at the bottom of the rectangular tubes. This also causes the efficiency of the heat exchanger to decrease, since only a part of the tube is efficiently used.

KR20030029517A shows a heat exchanger water trap with a heat exchange chamber defined by the shell, an upper plate, a lower plate. A plurality of drainpipes is passing through the heat exchange chamber. The construction of KR20030029517A involves a risk of odours rising from downstream and that the heat exchange is too low.

Thus, there is a need for a new water trap that is both easily accessible for cleaning, easily installed and ensure high efficiency.

### Summary of the invention

The problems with the previous solutions have elegantly been solved providing a novel heat exchanger water trap.

The heat exchanger water trap for transferring heat from drainpipe discharge according to the invention comprises the features of independent claim 1.

In a preferred embodiment the heat exchanger water trap further comprises a discharges system, the discharge system comprising a rising chamber and a trap conduit. The discharge system could be defined by the shell, the lower plate, the inner wall, the upper plate and a bottom plate. In the discharge system a rise wall 14 could be positioned so that liquid cannot pass below it and at the same time leaving an opening 21 for liquid to flow over the top of the rise wall or through a hole in the rise wall. Thereby a liquid rising chamber and a trap conduit can be established in the discharge system. The liquid rising chamber then is defined by the inner wall, the rise wall, the bottom plate and the shell and the trap conduit by the inner wall, the rise wall and the shell.

Thereby, the discharge conduit will function as a weir preventing gasses and odours from rising up through the drainage system from the sewers.

In a preferred embodiment the heat exchanger water trap comprises quick connectors for connecting the heat exchanger water trap to existing piping or to a drainpipe fitting. Quick connectors are connectors that can click on/click off a piping without the use of heavy tool. Examples of quick connectors are snap fit connectors.

The novel water trap has an improved heat exchange compared to the previously disclosed water traps with heat exchanging function. Further, the novel water trap is novel in that the water trap is more accessible for cleaning due to its novel fastening mechanism. The fastening mechanism makes it possible to remove the entire water trap easily so that it can be cleaned in a separate place such as in a sink. Further, the simple construction of the water trap makes the water trap cheaper to manufacture. Thereby, it is possible to have multiple water traps so that while one water trap is being cleaned, a second water trap is put into the drainpipe and vice versa.

The invention further relates to a heat exchanger system comprising a heat exchanger water trap as described above and further comprises a drainpipe fitting, the drainpipe fitting having openings for connecting with existing piping circulating the fluid to be heated, the openings further being adapted to connect with the liquid inlet and the liquid outlet of the heat exchanger water trap respectively.

In a preferred embodiment, the plurality of drainpipes is made of copper, stainless steel, brass or aluminium, or a combination thereof.

In another preferred embodiment, the drain pipe fitting and/or the quick connectors are made of copper, stainless steel, brass or aluminium, or a combination thereof.

In another aspect of the invention, the invention relates to a method of transferring heat between a discard liquid, such as heated bathing water, and a liquid to be heated, such as water, without mixing the liquids comprising the steps of:
- Splitting the discard liquid into a plurality of discard streams
- Introducing a liquid to be heated into a heat exchanger chamber surrounding a plurality of drainpipes through which the plurality of discard streams passes
- Forcing the liquid to be heated to pass the plurality of drainpipes multiple times
- Releasing the liquid to be heated in a heated state at a gravitationally higher point than when it was introduced.

By splitting the discard liquid, such as a heated bathing water, into a plurality of discard streams, it is possible to transfer more heat than in the situation where only a single stream of discard liquid is used.

The method according to the invention further comprises the steps of:
- Collecting and combining the discard streams into a cooled discard liquid
- Discarding the cooled discard liquid via a weir.

By collecting and combining the discard streams after the heat transfer has taken place, it is possible to discard the discard liquid via a weir construction and thereby the traditional weir function can still be achieved with all the advantages this give.

### Detailed description of the invention

As will be appreciated by a person skilled in the art, heat transfer can be increased by increasing the fluid passing across the area at which transfer is wanted. Typically, the water in the furthest corner from the outlet is basically stagnant, which means heat transfer is limited. Also, as hot fluid tends to rise towards the top, due to change in density and therefore buoyancy, tubes located in the bottom of the heat exchanger tend to have a lower efficiency, compared to the ones at the top.

In a preferred embodiment, the heat exchanger water trap comprises heat exchanger baffles. The baffles force the liquid to be heated to pass the plurality of drainpipes several times. The heat exchanger baffles can extend from the sides of the shell, preferably in a cylindrical way and almost covering the entire cross section area of the shell, leaving only a small portion of the cross-sectional area for the liquid to be heated to pass through. Thereby, the liquid to be heated has an extended travel path through the heat exchanging chamber and thereby more heat is transferred. Preferably, the heat exchanger water trap comprises 2-50 heat exchanger baffles, more preferably 10-15 heat exchanger baffles.

In a preferred embodiment, the heat exchanger baffles are aligned in a parallel configuration. Preferably, the heat exchanger baffles are made of a good heat conducting material. Preferably, they are made of a metal such a steel, stainless steel, zinc or copper. Especially copper is preferred.

Further, brass or aluminium can also be used for the heat exchanger baffles, or a combination of steel, stainless steel, zinc, copper, brass and aluminium can be used.

Preferably, the liquid outlet is positioned gravitationally higher than the liquid inlet, whereby a cross counter flow through the heat exchanging chamber is established. Then cold liquid meets the coldest parts of the plurality of drainpipes and as the liquid to be heated passes up and is guided by the heat exchanger baffles continuously meeting warmer and warmer surface of the drainpipes. In this way, heat transfer is further enhanced.

The surface of the heat transfer area can further be increased by increasing the number of drainpipes. By positioning the drainpipes substantially vertical in the heat exchanger water trap, the gravitational forces support the flow through the drainpipes and therefore more drainpipes can be positioned in the water trap without hampering the flow of wastewater significantly. In a preferred embodiment, the water trap comprises more than 10 drainpipes, preferably more than 25 drainpipes, even more preferred more than 50 drainpipes, especially more than 100 drainpipes are used. The advantage of using more drainpipes is as mentioned that a larger surface for heat transfer is available and thus a better heat transfer takes place.

Preferably, the heat exchanger water trap further comprises a hair strainer that is removably attachable to the shell. This makes it possible to perform partial cleaning without removing the water trap. This is relevant in cases of hair being trapped on/in the hair strainer, while the rest of the system is still sufficiently clean for continued operation.

Preferably, the shell and/or the drainpipe fitting is of a substantially cylindrical shape, so as to make it possible to install the heat exchanger water trap in an existing drainpipe. When a discharge system is part of the water trap, a part of the discharge system may be squared.

In a preferred embodiment, the heat exchanger water trap may be integrated to new or existing wastewater pipes, for instance located under the shower room itself.

In principle, the plurality of drainpipes can be made of any good heat conducting material. It is preferred that the plurality of drainpipes are made by a metal such a steel, stainless steel, zinc or copper. Especially copper is preferred.

In a preferred embodiment, the heat exchanger baffles and the plurality of drainpipes are made of the same material.

Preferably, the plurality of drainpipes are locked in place by a lower and an upper plate.

The device is a convenient way of recovering heat energy from wastewater passing through a shower waste trap or at least providing the public with a useful alternative.

Preferably, the connection of the liquid to be heated such as cold water is happening through quick connections.

### Short description of the drawings

Figure 1 illustrates a heat exchanger water trap seen partly from above and partly from the side.
Figure 2 illustrates the heat exchanger water trap from figure 1 cut in half.
Figure 3 illustrates a heat exchanger water trap inserted into a drainpipe fitting.
Figure 4 illustrates the heat exchanger water trap from figure 3 cut in half.
Figure 5 illustrates a heat exchanger water trap inserted in a drainpipe fitting in a schematic view.
Figure 6 illustrates a heat exchanger water trap from figure 4 with a slightly different cut.

### Detailed description of drawings

Referring to the drawings it will be appreciated that a waste trap can be implemented in various shapes. The following embodiments are described by a way of example only. For convenience of explanation, the drawings show the device orientated as used in a typical application, which is a general vertical position, although the device could be orientated with some degree, depending on the installation surroundings.

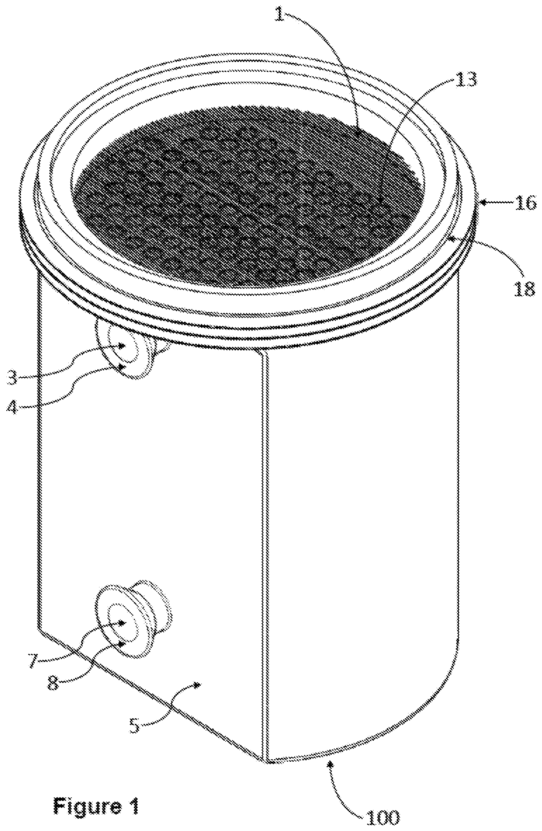

Figure 1 illustrates a water trap 100 seen from the outside. The water trap comprises a substantially cylindrical shell 5 with a liquid inlet 7 for receiving a liquid to be heated and a liquid outlet 3 for releasing the heated liquid. The substantially cylindrical shell has a longitudinal direction Z, 20. The liquid inlet 7 and the liquid outlet 3 are equipped with quick connectors 4, 8 for releasably connecting the waste trap to existing piping circulating the fluid to be heated. The advantage of the quick connectors is that it is possible to remove the entire waste trap during service or cleaning or exchange the waste trap without the use of heavy equipment. Further, in the illustrated embodiment, the liquid outlet 3 is positioned gravitationally higher than the liquid inlet 7, when the water trap is installed. The water trap further comprises a groove 18 into which an O-ring 16 can be fitted. The O-ring stabilizes the waste trap when installed and it also provides a sealing so as to force the wastewater through the water trap. The water trap further comprises a plurality of drainpipes 13 for conveying a heated discharge fluid such as bathing water, shower water etc. and in that process transferring heat to the fluid to be heated. Above the plurality of drain pipes an optional hair strainer 1 in form of a set of wires is positioned so as to retain hair and other objects which could clock the water trap and thereby require more frequent cleaning of the water trap itself.

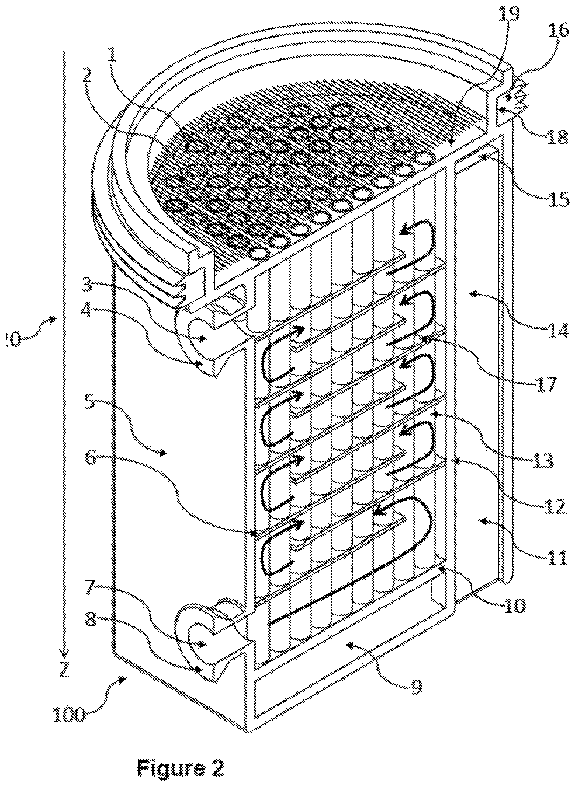

Figure 2 illustrates the water trap from figure 1 cut in half so as to illustrate the interior. In the embodiment illustrated in figure 2, the water trap comprises a substantially cylindrical shell 5. The shell has an upper plate 19 being perforated with a plurality of drainpipes 13 and a lower plate 10 partially covering the interior of the shell 5. The lower plate 10 extends in a lateral direction to the longitudinal direction Z, the lower plate also being perforated with the plurality of drainpipes. The lower plate 10 can be perpendicular to the longitudinal direction Z, or it can be tilted or slanted. Further, the lower plate can be substantially flat or it can be curved. The plurality of drainpipes 13 have drainpipe inlets 2 and drainpipe outlets in or slightly below the lower plate 10. Below the outlets of the plurality of drainpipes, a bottom plate 9 is provided. The water trap further comprises an inner wall 12 (not visible) dividing the interior of the shell 5 into two parts such that a heat exchange chamber 6 and a discharge system is defined. The heat exchange chamber 6 is defined by the shell 5, the upper plate 19, the lower plate 10 and the inner wall 12. In the figure, the inner wall 12 is shown as a wall of a square, but as will be appreciated by a person skilled in the art, the shape of the wall can be of a variety of shapes such as a curve, an S or similar. The heat exchange chamber 6 is provided with a plurality of heat exchanger baffles 17. The heat exchanger baffles 17 create a longer flow path for the liquid to be heated and create sub-chambers of which the fluid to be heated interacts with the outer side of the drainpipes 13, whereby heat is transferred from the waste fluid to the liquid to be heated. The actual number of heat exchanger baffles 17 depends on the liquid flow rates present in both the drainpipes 13 and the fluid in the heat exchanging chamber 6. The baffles 17 force the liquid to be heated in a counter-cross direction of the waste fluid such as wastewater.

A discharge system is defined by the shell 5, the lower plate 10, the inner wall 12, the bottom plate 9 and the upper plate 19. In the discharge system a rise wall 14 is positioned so that liquid cannot pass below it but at the same time leaving an opening 21 for liquid to flow over the top of the rise wall. Thereby, a liquid rising chamber and a trap conduit is established in the discharge system. When the surface of the wastewater rises to the top of the rise wall, it enters the trap conduit 15 which acts as a weir. Thereby, gasses, odours etc from the sewers or the like are prevented from entering the system upstream of the weir. The flow path of the wastewater will then be as follows. First the wastewater passes though the plurality of drainpipes 13, whereby heat is transferred in the heat exchanging chamber 6. After exiting the plurality of drainpipes 13, the wastewater is stopped by the bottom plate 9 and forced to rise behind the rise wall until it reaches the opening 21 in/above the rise wall 14 and then exits via the trap conduit 15 and a lower trap conduit 11.

The shell 5 may be fixed within a drainpipe with the use of the quick connectors 4, 8 and stabilized by the base trap O-ring 16. Alternatively, the water trap could be integrated with the floor tray of the shower instead of into a drainpipe.

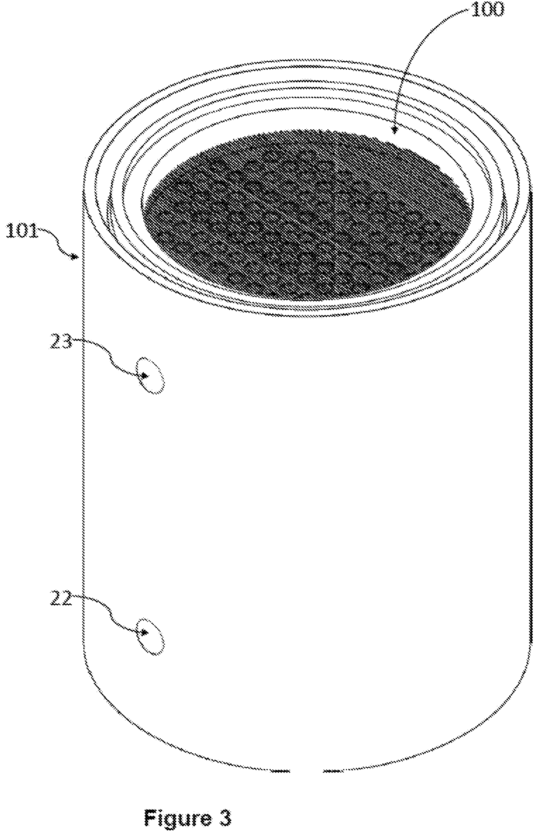

Figure 3 illustrates an embodiment, where the water trap 100 is inserted into a drainpipe fitting 101. The drainpipe fitting 101 has openings 22 and 23 for the existing piping circulating the fluid to be heated. The drainpipe fitting 101 may be fixed in the drainpipe of a shower floor during construction or later when heat exchanging is desired. The water trap 100 is releasably fixed in the drainpipe fitting 101.

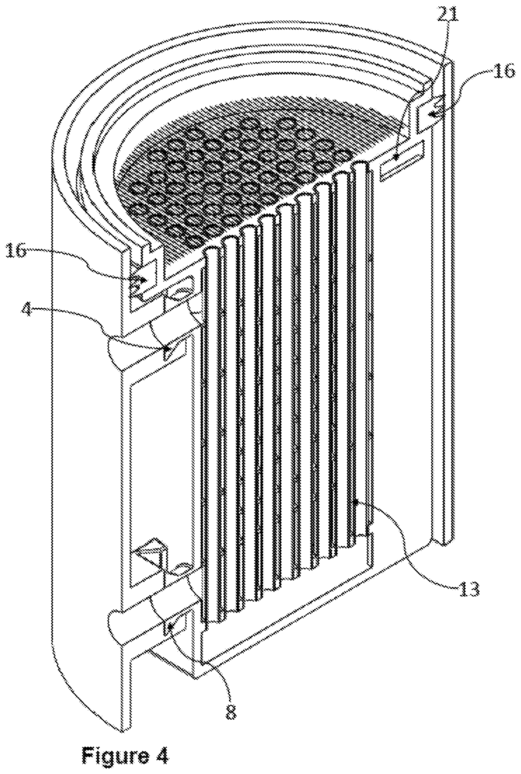

Figure 4 illustrates how the quick connectors 4,8 engage with the drainpipe fitting 101 and thereby connect the fluid inlet 7 and the fluid outlet 3 with the respective openings 22, 23 of the drainpipe fitting, thereby completing the fluid communication from a supply of liquid to be heated via an opening 22 into the fluid inlet 7 and through the heat exchanging chamber 6 before exiting via 4 and 23 into the existing piping. The figure further illustrates how the O-ring 16 seals a gap between the drainpipe fitting 101 and the water trap 101 thereby forcing the waste fluid such as wastewater to run through the water trap and thereby transfer heat. Further, the figure illustrates the multiple heat exchanger baffles 17.

The invention is at first glance meant to be used as a water trap, with a heat exchanger inside, in a regular shower drainpipe, in a regular household. But this invention can also be used in other places, where heated wastewater is present, for instance at public launderettes or swimming pools. The same principle of installing and recovering the heat in wastewater applies at institutions, like these, as in private homes.

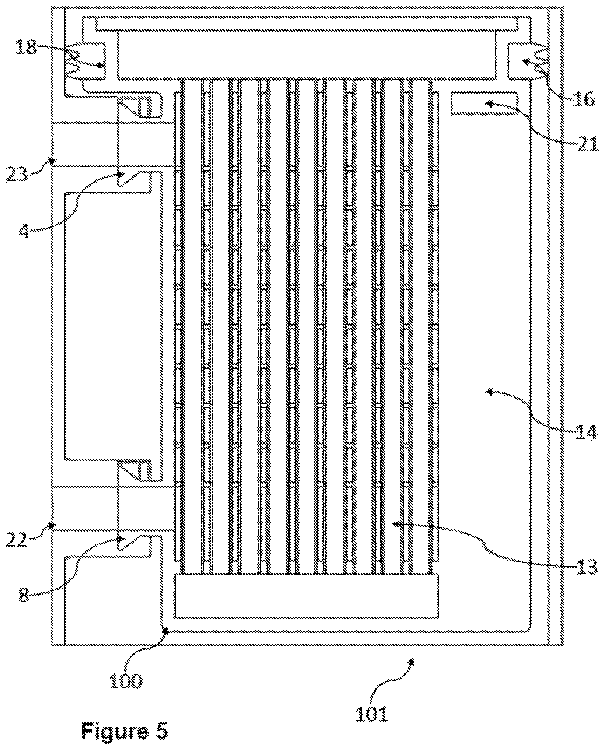

Figure 5 illustrates a heat exchanger water trap 100 coupled with a drainpipe fitting 101. It can be seen how the openings 22, 23 are adapted to connect with the liquid inlet 7 and the liquid outlet 3 via the quick connectors 4, 8. Further, the figure illustrates an embodiment where there is an opening 21 in the rise wall 14 which functions as a weir. In the top part of the heat exchanger water trap 100 is a groove 18 provided, and in the groove 18 is an O-ring 16 positioned. As can be seen in the figure, the O-ring fits with the drainpipe fitting 101 so that the discard liquid cannot pass outside the water trap and is instead forced to pass through the plurality of drainpipes 13.

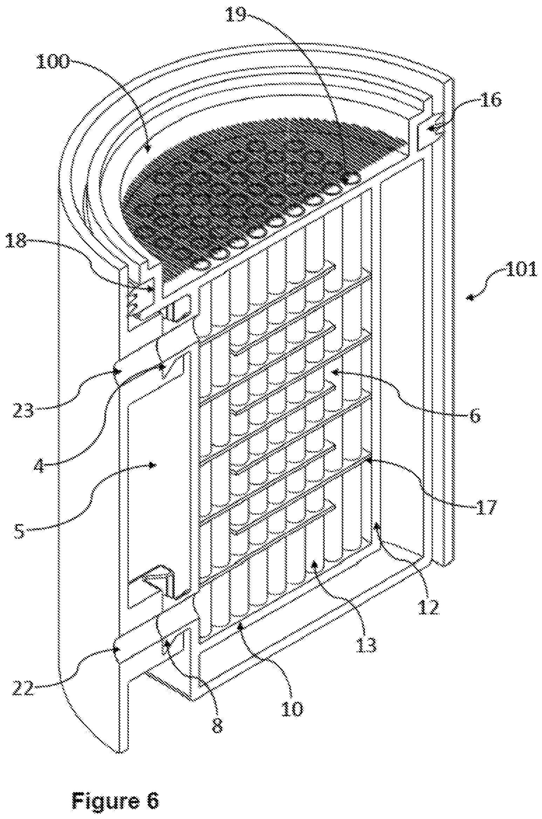

Figure 6 illustrates how the quick connectors 4,8 engage with the drainpipe fitting 101 and thereby connects the fluid inlet 7 and the fluid outlet 3 with the respective openings 22, 23 of the drainpipe fitting, thereby completing the fluid communication from a supply of liquid to be heated via an opening 22 into the fluid inlet 7 and through the heat exchanging chamber 6 before exiting via 4 and 23 into the existing piping. The figure further illustrates how the O-ring 16 seals a gap between the drainpipe fitting 101 and the water trap 100 thereby forcing the waste fluid such as wastewater to run through the water trap and thereby transfer heat. Further, the figure illustrates the multiple heat exchanger baffles 17. Figure 6 gives a clearer illustration of the inner wall 12, and how the heat exchange chamber 6 is defined by the shell 5, the upper plate 19, the lower plate 10 and the inner wall 12.

### LIST OF FEATURES LABELLED IN THE FIGURES

- 1: Hair strainer
- 2: Drainpipe inlet
- 3: liquid outlet
- 4: Quick connector
- 5: Shell
- 6: heat exchange chamber
- 7: liquid inlet
- 8: Quick connector
- 9: Bottom plate
- 10: Lower plate
- 11: lower trap conduit
- 12: Inner wall
- 13: Plurality of drainpipes
- 14: Rise wall
- 15: trap conduit
- 16: O-ring
- 17: heat exchanger baffles
- 18: groove
- 19: upper plate
- 20: Longitudinal direction Z
- 21: opening in/above rise wall
- 22, 23: openings in drainpipe fitting
- 100: heat exchanger water trap
- 101: drainpipe fitting

## Claims

1. A heat exchanger water trap for transferring heat from drainpipe discharge, said heat exchanger water trap comprising:
• A shell (5) being substantially cylindrical and having a longitudinal direction Z (20), said shell comprising a liquid inlet (7) for receiving a liquid to be heated and a liquid outlet (3) for said liquid to exit once heated
• A heat exchange chamber (6)
• a plurality of drainpipes (13) for receiving a discharge liquid such as wastewater or hot bathing water, said drainpipes (13) having an inner surface and an outside surface
• wherein said plurality of drainpipes (13) passing through the heat exchange chamber (6), whereby the liquid to be heated is in contact with at least part of the outside surface of said plurality of drainpipes (13)
• wherein the heat exchange chamber (6) is defined by the shell (5), an upper plate (19), a lower plate (10) at least partially covering the interior of the shell (5) and an inner wall (12) and that the plurality of drainpipes (13) are extending in the longitudinal direction Z (20) and **characterized in that** the inner wall (12) is also extending in the longitudinal direction (20).

2. A heat exchanger water trap according to claim 1 which further comprises a discharge system, said discharge system comprising a rising chamber and a trap conduit.

3. A heat exchanger water trap according to claim 2, wherein the discharge system is defined by the shell (5), the lower plate (10), the inner wall (12) extending in the longitudinal direction, the upper plate (19) and a bottom plate (9), the discharge system further comprising a rise wall (14) extending in the longitudinal direction.

4. A heat exchanger water trap according to any one of the preceding claims, where the liquid outlet (3) is mounted gravitationally higher than said liquid inlet (7).

5. A heat exchanger water trap according to any one of the preceding claims, where the liquid inlet (7) and the liquid outlet (3) comprise mounting means in form of quick connectors.

6. A heat exchanger water trap according to any one of the preceding claims comprising a releasably attached hair strainer.

7. A heat exchanger water trap according to any one of the preceding claims which further comprises a plurality of heat exchanger baffles.

8. A heat exchanger water trap according to claim 7, where the plurality of heat exchanger baffles are aligned in a parallel configuration

9. A heat exchanger system comprising a heat exchanger water trap according to any one of claims 1-8 and a drainpipe fitting (101), the drainpipe fitting having openings for connecting with existing piping circulating the fluid to be heated, said openings further being adapted to connect with the liquid inlet (7) and the liquid outlet (3) of the heat exchanger water trap, respectively.

10. A method of transferring heat between a discard liquid, such as heated bathing water, and a liquid to be heated, such as water, without mixing the liquids comprising the steps of:
• Splitting the discard liquid into a plurality of discard streams
• Introducing a liquid to be heated into a heat exchanger chamber surrounding a plurality of drainpipes being substantially vertically arranged through which the plurality of discard streams passes
• Forcing the liquid to be heated to pass the plurality of drainpipes multiple times
• Releasing the liquid to be heated in a heated state at a gravitationally higher point than when it was introduced
• Collecting and combining the discard streams into a cooled discard liquid.
• Discarding the cooled discard liquid via a weir.

11. Use of a heat exchanger water trap according to any one of claims 1-9 for heating of water.

## Patentansprüche

1. Ein Wärmetauscher-Wasserabscheider zum Übertragen von Wärme aus dem Abfluss eines Abflussrohrs, der Wärmetauscher-Wasserabscheider umfassend:
• Ein Gehäuse (5), das im Wesentlichen zylindrisch ist und eine Längsrichtung Z (20) aufweist, wobei das Gehäuse einen Flüssigkeitseinlass (7) zum Einleiten einer zu erwärmenden Flüssigkeit und einen Flüssigkeitsauslass (3) zum Ausleiten der erwärmten Flüssigkeit umfasst
• Einer Wärmetauschkammer (6)
• Einer Vielzahl von Abflussrohren (13) zum Aufnehmen einer Abflussflüssigkeit wie Abwasser oder heißem Badewasser, wobei die Abflussrohre (13) eine Innenfläche und eine Außenfläche aufweisen
• Wobei die Vielzahl von Abflussrohren (13) durch die Wärmetauschkammer (6) verläuft, wodurch die zu erwärmende Flüssigkeit mit mindestens einem Teil der Außenfläche der Vielzahl von Abflussrohren (13) in Kontakt steht (13)
• Wobei die Wärmetauschkammer (6) durch das Gehäuse (5), eine obere Platte (19), eine untere Platte (10), die zumindest teilweise das Innere des Gehäuses (5) abdeckt, und eine Innenwand (12) definiert ist und dass sich die Vielzahl von Abflussrohren (13) in Längsrichtung Z (20) erstreckt, **dadurch gekennzeichnet, dass** sich die Innenwand (12) ebenfalls in Längsrichtung (20) erstreckt.

2. Ein Wärmetauscher-Wasserabscheider nach Anspruch 1, der ferner ein Abflusssystem umfasst, wobei das Abflusssystem eine Steigkammer und eine Fallrohrleitung umfasst.

3. Ein Wärmetauscher-Wasserabscheider nach Anspruch 2, wobei das Abflusssystem durch das Gehäuse (5), die untere Platte (10), die sich in Längsrichtung erstreckende Innenwand (12), die obere Platte (19) und eine Bodenplatte (9) definiert ist, wobei das Abflusssystem ferner eine sich in Längsrichtung erstreckende Steigwand (14) umfasst.

4. Wasserabscheider für Wärmetauscher gemäß einem der vorstehenden Ansprüche, wobei der Flüssigkeitsauslass (3) gravitativ höher angebracht ist als der Flüssigkeitseinlass (7).

5. Ein Wärmetauscher-Wasserabscheider nach einem der vorstehenden Ansprüche, wobei der Flüssigkeitseinlass (7) und der Flüssigkeitsauslass (3) Befestigungsmittel in Form von Schnellkupplungen umfassen.

6. Ein Wärmetauscher-Wasserabscheider nach einem der vorstehenden Ansprüche, der einen lösbar angebrachten Haarfilter umfasst.

7. Ein Wärmetauscher-Wasserabscheider nach einem der vorstehenden Ansprüche, der ferner mehrere Wärmetauscher-Leitbleche umfasst.

8. Ein Wärmetauscher-Wasserabscheider nach Anspruch 7, wobei die Vielzahk von Wärmetauscher-Leitblechen in einer parallelen Konfiguration ausgerichtet sind.

9. Ein Wärmetauschersystem, das einen Wärmetauscher-Wasserabscheider nach einem der Ansprüche 1 bis 8 und eine Abflussrohrverschraubung (101) umfasst, wobei die Abflussrohrverschraubung Öffnungen zum Anschluss an vorhandene Rohrleitungen aufweist, in denen die zu erwärmende Flüssigkeit zirkuliert, wobei die Öffnungen ferner zum Anschluss an den Flüssigkeitseinlass (7) bzw. den Flüssigkeitsauslass (3) des Wärmetauscher-Wasserabscheiders ausgelegt sind.

10. Ein Verfahren zum Übertragen von Wärme zwischen einer Abflussflüssigkeit, wie beispielsweise erwärmtem Badewasser, und einer zu erwärmenden Flüssigkeit, wie beispielsweise Wasser, ohne die Flüssigkeiten zu vermischen, umfassend die folgenden Schritte:
• Aufteilen der Abflussflüssigkeit in eine Vielzahl von Abflussströmen
• Einleiten einer zu erwärmenden Flüssigkeit in eine Wärmetauschkammer, die eine Vielzahl von im Wesentlichen vertikal angeordneten Abflussrohren umgibt, durch die die eine Vielzahl von Abflussströmen fließt
• Zwingen der zu erwärmenden Flüssigkeit, die eine Vielzahl von Abflussrohren mehrfach zu durchfließen
• Ableiten der zu erwärmenden Flüssigkeit in erwärmtem Zustand an einem Punkt, der gravitativ höher liegt als der Punkt, an dem sie zugeführt wurde
• Sammeln und Zusammenführen der Abflussströme zu einer gekühlten Abflussflüssigkeit
• Ableiten der gekühlten Abflussflüssigkeit über ein Wehr.

11. Verwendung eines Wärmetauscher-Wasserabscheiders nach einem der Ansprüche 1 bis 9 zum Erwärmen von Wasser.

## Revendications

1. Pot de purge d'échangeur de chaleur pour transférer de la chaleur à partir de la décharge du tuyau de drainage, ledit pot de purge d'échangeur de chaleur comprenant :
une enveloppe (5) sensiblement cylindrique et présentant une direction longitudinale Z (20), ladite enveloppe comprenant une entrée de liquide (7) pour recevoir un liquide à chauffer et une sortie de liquide (3) pour que ledit liquide sorte une fois chauffé,
une chambre d'échange de chaleur (6),
une pluralité de tuyaux de drainage (13) pour recevoir un liquide de décharge tel que des eaux usées ou des eaux de bain chaudes, lesdits tuyaux de drainage (13) présentant une surface intérieure et une surface extérieure,
dans lequel ladite pluralité de tuyaux de drainage (13) traversant la chambre d'échange de chaleur (6), moyennant quoi le liquide à chauffer est en contact avec au moins une partie de la surface extérieure de ladite pluralité de tuyaux de drainage (13),
dans lequel la chambre d'échange de chaleur (6) est définie par l'enveloppe (5), une plaque supérieure (19), une plaque inférieure (10) recouvrant au moins partiellement l'intérieur de l'enveloppe (5) et une paroi intérieure (12), et en ce que la pluralité de tuyaux de drainage (13) s'étendent dans la direction longitudinale Z (20), et **caractérisé en ce que** la paroi interne (12) s'étend également dans la direction longitudinale (20).

2. Pot de purge d'échangeur de chaleur selon la revendication 1, qui comprend en outre un système de décharge, ledit système de décharge comprenant une chambre de montée et un conduit de pot.

3. Pot de purge d'échangeur de chaleur selon la revendication 2, dans lequel le système de décharge est défini par l'enveloppe (5), la plaque inférieure (10), la paroi intérieure (12) s'étendant dans la direction longitudinale, la plaque supérieure (19) et une plaque inférieure (9), le système de décharge comprenant en outre une paroi de montée (14) s'étendant dans la direction longitudinale.

4. Pot de purge d'échangeur de chaleur selon l'une quelconque des revendications précédentes, dans lequel la sortie de liquide (3) est montée par gravité plus haut que ladite entrée de liquide (7).

5. Pot de purge d'échangeur de chaleur selon l'une quelconque des revendications précédentes, dans lequel l'entrée de liquide (7) et la sortie de liquide (3) comprennent des moyens de montage sous la forme de connecteurs rapides.

6. Pot de purge d'échangeur de chaleur selon l'une quelconque des revendications précédentes, comprenant une passoire à cheveux fixée de manière amovible.

7. Pot de purge d'changeur de chaleur selon l'une quelconque des revendications précédentes, qui comprend en outre une pluralité de déflecteurs d'échangeur de chaleur.

8. Pot de purge d'échangeur de chaleur selon la revendication 7, dans lequel la pluralité de déflecteurs d'échangeur de chaleur sont alignés dans une configuration parallèle

9. Système d'échangeur de chaleur comprenant un pot de purge d'échangeur de chaleur selon l'une quelconque des revendications 1 à 8 et un raccord de tuyau de drainage (101), le raccord de tuyau de drainage présentant des ouvertures pour une connexion avec une tuyauterie existante faisant circuler le fluide à chauffer, lesdites ouvertures étant en outre adaptées pour se connecter à l'entrée de liquide (7) et à la sortie de liquide (3) du pot de purge d'échangeur de chaleur, respectivement.

10. Procédé de transfert de chaleur entre un liquide de rebut, tel que de l'eau de bain chauffée, et un liquide à chauffer, tel que de l'eau, sans mélanger les liquides, comprenant les étapes consistant à :
diviser le liquide de rebut en une pluralité de flux de rebut,
introduire un liquide à chauffer dans une chambre d'échangeur de chaleur entourant une pluralité de tuyaux de drainage disposés sensiblement verticalement à travers lesquels passe la pluralité de flux de rebut,
forcer le liquide à chauffer à traverser la pluralité de tuyaux de drainage plusieurs fois,
libérer le liquide à chauffer dans un état chauffé à un point gravitationnellement plus élevé que lors de son introduction,
recueillir et combiner les flux de rebut en un liquide de rebut refroidi,
décharger le liquide de rebut refroidi via un déversoir.

11. Utilisation d'un pot de purge d'échangeur de chaleur selon l'une quelconque des revendications 1 à 9 pour chauffer de l'eau.
